# EUROPEAN PATENT APPLICATION

(11) **EP 1 580 973 A1**
(43) Date of publication of application: **28.09.2005**
(21) Application number: 05251554.1
(22) Date of filing: 15.03.2005
(51) Int. Cl.: H04M 3/42, H04M 7/00

(54) **Method for routing an emergency call from a voice over internet protocol phone to a public safety answering point**

(30) Priority: 26.03.2004 US 811089
(71) Applicant: LUCENT TECHNOLOGIES INC., Murray Hill, New Jersey 07974-0636 (US)
(72) Inventor: Barclay, Deborah L., Winfield Illinois 60190 (US); Benco, David S., Winfield Illinois 60190 (US); Mahajan, Sanjeev, Naperville Illinois 60565 (US); McRoberts, Thomas L., Naperville Illinois 60540 (US); Ruggerio, Raymond Leroy, Glenview Illinois 60025 (US)
(74) Representative: Watts, Christopher Malcolm Kelway

(57) **Abstract**

The present invention provides a method for routing an emergency call from a VoIP (Voice over Internet Protocol) phone to a PSAP (Public Safety Answering Point). A VoIP service provider receives an emergency call request from a VoIP phone. The VoIP service provider identifies the location of the VoIP phone. The VoIP service provider determines a PSAP associated with the location of the VoIP phone, and routes the emergency call request to the PSAP associated with the location of the VoIP phone.

## Description

### FIELD OF THE INVENTION

The present invention relates generally to communication systems, and more particularly to a method for routing emergency calls.

### BACKGROUND OF THE INVENTION

Existing PSTN (Public Switched Telephone Network) and wireless networks include standards and implementations that allow emergency calls, such as calls initiated by dialing 911, to be routed to a 911 Call Center, commonly referred to as a Public Safety Answering Point (PSAP).

It is desirable to route the emergency call request to the PSAP that is geographically closest to the originating caller. This is accomplished by using the directory number of a wireline phone or location information of a wireless phone. This allows any emergency response personnel to respond to the caller in the most expeditious manner possible.

A new type of communication network is a Voice over Internet Protocol (VoIP) network. The majority of commercial VoIP phone service is provided over broadband networks, such as Cable modem or DSL (Digital Subscriber Line) service. One shortcoming of broadband VoIP networks is that there does not exist any way to determine the PSAP that is closest to a VoIP phone. Therefore, a need exists for a method that allows a VoIP phone to place an emergency call and have the call routed to the appropriate PSAP.

### BRIEF SUMMARY OF THE INVENTION

The present invention provides a method for routing an emergency call from a voice over internet protocol (VoIP) phone to a Public Safety Answering Point (PSAP). A VoIP service provider, typically a broadband service provider such as a cable modem or DSL service, receives a request for VoIP service from for a VoIP phone. The VoIP service provider registers the VoIP phone for service, and stores various information pertaining to the VoIP phone, such as calling plan, directory number, and other pertinent information.

One of the pieces of information relating to the VoIP phone that the VoIP service provider stores is an identifier for the VoIP phone. In broadband cable modem systems, this is a nineteen digit number that is used to identify the VoIP premises. In DSL systems, this is a DSL line number. The VoIP service provider preferably uses the identifier as an index into the table or database in which the information for a VoIP phone is stored.

The VoIP service provider stores in the VoIP record for each VoIP phone the address, or location, of the premises in which the VoIP phone is used. In accordance with an exemplary embodiment of the present invention, the VoIP service provider stores in each VoIP record a PSAP routing number associated with the VoIP phone. The PSAP routing number is preferably the number of the PSAP that is located closest, geographically, to the customer premises address of the VoIP phone.

When an emergency call request is received by the VoIP service provider, the VoIP service provider determines the PSAP that is associated with the location of the VoIP phone. This is preferably done by determining the identifier of the VoIP phone making the emergency call and retrieving the PSAP routing number from the record of the VoIP phone making the emergency call. The VoIP service provider then routes the emergency call request to the PSAP associated with the location of the VoIP phone.

### BRIEF DESCRIPTION OF THE SEVERAL VIEWS OF THE DRAWINGS

FIG. 1 depicts a communication system including a cabled premises and a DSL premises in accordance with an exemplary embodiment of the present invention.
FIG. 2 depicts a table for a cabled premises including PSAP routing numbers in accordance with an exemplary embodiment of the present invention.
FIG. 3 depicts a table for a DSL premises including PSAP routing numbers in accordance with an exemplary embodiment of the present invention.
FIG. 4 depicts a flowchart of a method for routing an emergency call request for a Voice over Internet Protocol phone in accordance with an exemplary embodiment of the present invention.

### DETAILED DESCRIPTION OF THE INVENTION

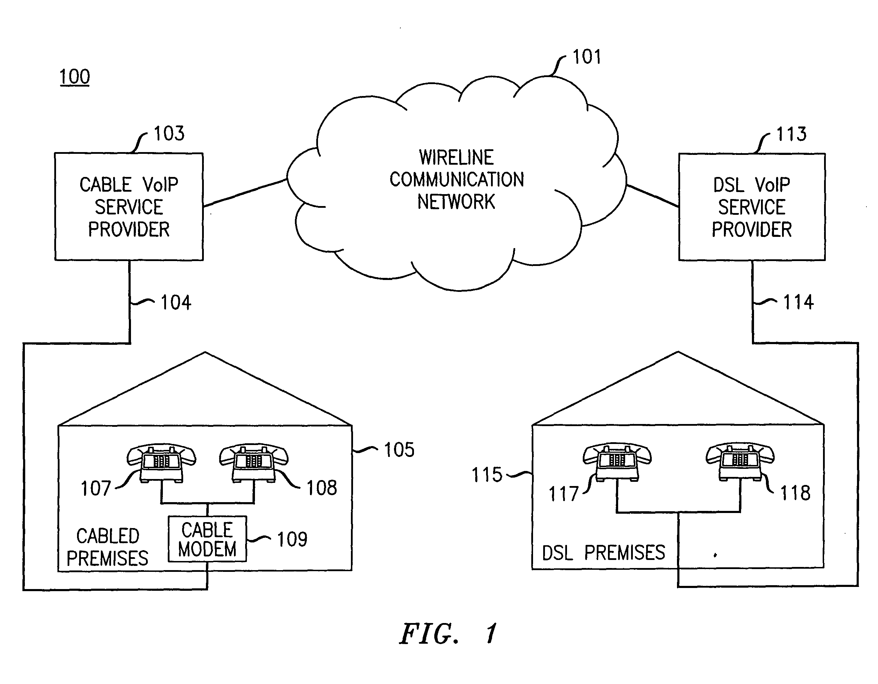

The present invention can be better understood with reference to FIGs. 1 through 4. FIG. 1 depicts a communication system 100 that includes a wireline communication network 101, cable VoIP service provider 103, cabled premises 105, DSL VoIP service provider 113, and DSL premises 115.

Wireline communication network 101 is preferably a public switched telephone network (PSTN). Wireline communication network 101 provides communication to a plurality of wireline users, only four of which, CPE 107, CPE 108, CPE 117, and CPE 118, are depicted for clarity.

Cable VoIP service provider 103 and DSL VoIP service provider 113 are connected to wireline communication network 101. In a preferred embodiment, there are a plurality of VoIP service providers connected to wireline communication network 101, and each of the plurality of VoIP service providers provide access for a plurality of CPEs to wireline communication network 101.

Cabled premises 105 is typically a house or other building, such as an office building, school, church, or any other building that is connected to wireline communication network 101 by cable VoIP service provider 103 via communication line 104. Cabled premises 105 is depicted with two customer premises equipment, CPE 107 and CPE 108, but can alternately have fewer or additional CPEs located therein. CPEs 107 and 108 can make and receive calls over wireline communication network 101 utilizing cable modem 109 and cable VoIP service provider 103. Cable modem 109 receives subscriber line 104 for premises 105 from cable VoIP service provider 103. Cable modem 109 has a MAC address associated with it, and the MAC address identifies the subscriber to Cable VoIP service provider 103.

DSL premises 115 is typically a house or other building, such as an office building, school, church, or any other building that is connected to wireline communication network 101 by DSL VoIP service provider 113 via communication line 114. DSL premises 115 is depicted with two customer premises equipment, CPE 117 and CPE 118, but can alternately have more or fewer CPEs disposed therein. CPEs 117 and 118 can make and receive calls over wireline communication network 101 utilizing communication line 114 and DSL VoIP service provider 113. DSL VoIP service provider 113 assigns a DSL line number to the DSL premises, and uses the DSL line number to identify the DSL premises and facilitate in the routing of received calls and in placing calls.

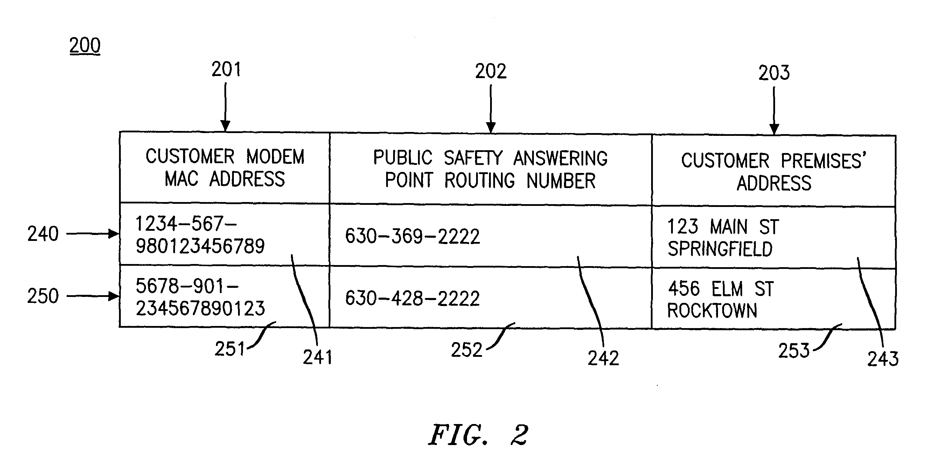

FIG. 2 depicts a table 200 for a cabled premises including PSAP routing numbers in accordance with an exemplary embodiment of the present invention. Table 200 is preferably maintained with the cooperation of the Public Safety Department of a city.

Table 200 includes three fields, Customer Modem MAC Address 201, PSAP Routing Number 202, and Customer Premises' Address 203. Table 200 can include additional fields, but only fields 201-203 are shown for clarity. Table 200 includes records 240 and 250. Record 240 includes Customer Modem MAC Address field 241, PSAP Routing Number field 242, and Customer Premises' Address field 243. Record 250 includes Customer Modem MAC Address field 251, PSAP Routing Number field 252, and Customer Premises' Address field 253.

In an exemplary embodiment, when a premises signs up for cable VoIP service, Cable VoIP service Provider 103 populates, for example, record 240 of table 200. Cable VoIP service Provider 103 stores a nineteen digit number that identifies the cable modem from which calls originate in Customer Modem MAC Address field 241. Cable VoIP service Provider 103 stores the address where the cable modem is stored in Customer Premises' Address field 243. Based upon the address of the premises, Cable VoIP service Provider 103 stores the directory number of PSAP associated with the address in PSAP Routing Number field 242. A similar process would occur for record 250.

When an emergency call request is received by cable VoIP service provider 103, the emergency call request includes the customer modem MAC address of the calling VoIP CPE. Cable VoIP service provider 103 accesses table 200 and searches Customer Modem MAC Address field 201 for the customer modem MAC address of the phone that placed the emergency VoIP call. When the calling customer modem MAC address is found in table 200, for example in field 251, Cable VoIP service provider 103 accesses PSAP routing number field 252 in record 250 for the calling VoIP phone. Cable VoIP service provider 103 then routes the emergency call request to the PSAP number retrieved from PSAP Routing Number field 252.

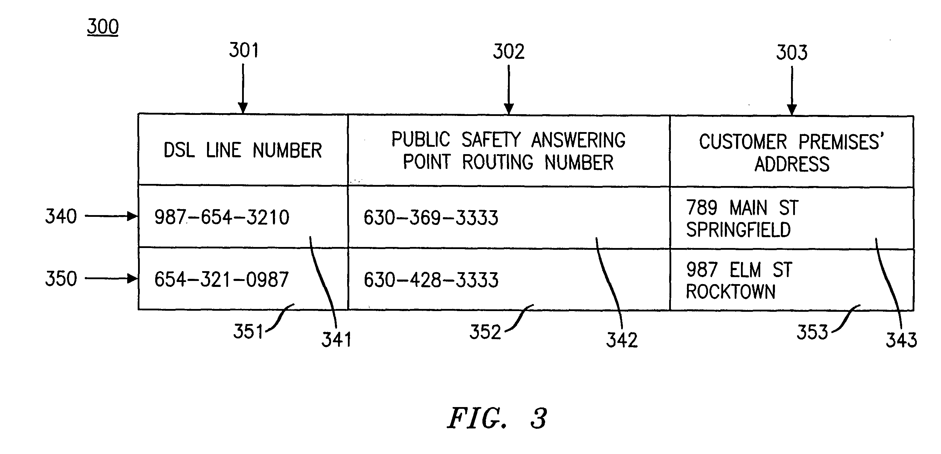

FIG. 3 depicts a table 300 for a DSL premises including PSAP routing numbers in accordance with an exemplary embodiment of the present invention. Table 300 is similar to table 200, but is directed to DSL VoIP systems.

Table 300 includes three fields, DSL Line Number 301, PSAP Routing Number 302, and Customer Premises' Address 303. Table 300 can include additional fields, but only fields 301-303 are shown for clarity.

Table 300 includes records 340 and 350. Record 340 includes DSL Line Number field 341, PSAP Routing Number field 342, and Customer Premises' Address field 343. Record 350 includes DSL Line Number field 351, PSAP Routing Number field 352, and Customer Premises' Address field 353.

In an exemplary embodiment, when a premises signs up for DSL VoIP service, DSL VoIP service Provider 113 populates table 300, for example record 340. DSL VoIP service Provider 113 stores a ten digit line number that identifies the premises from which calls originate in DSL Line Number field 341. DSL VoIP service Provider 113 stores the address of the premises associated with the DSL line number in Customer Premises' Address field 343. Based upon the address of the premises, Cable VoIP service Provider 113 stores the directory number of PSAP associated with the address in PSAP Routing Number field 342. A similar process would occur to populate field 350 in table 300.

When an emergency call request is received by DSL VoIP service provider 113, the emergency call request includes the DSL Line Number of the calling VoIP CPE. DSL VoIP service provider 113 accesses table 300 and searches DSL Line Number 301 for the DSL Line number of the phone that placed the emergency VoIP call. When the calling DSL line number is found in table 300, for example in record 350, DSL VoIP service provider 113 accesses the PSAP routing number field 352 in record 350 as the DSL Line Number of the calling VoIP phone. DSL VoIP service provider 113 then routes the emergency call request to the PSAP number retrieved from PSAP Routing Number field 352.

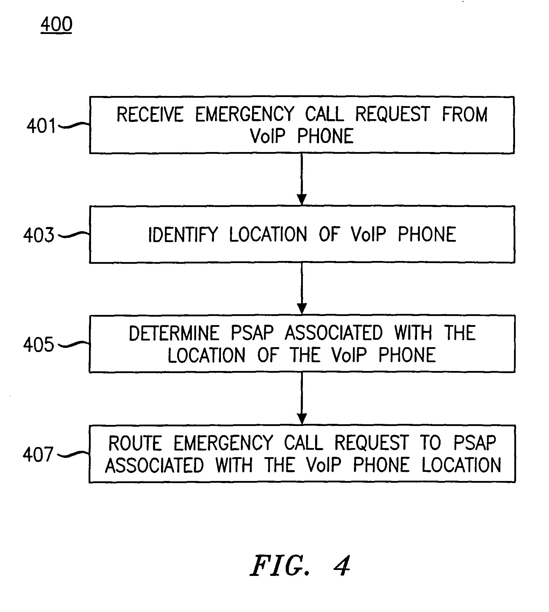

FIG. 4 depicts a flowchart 400 of a method for routing an emergency call request for a Voice over Internet Protocol phone in accordance with an exemplary embodiment of the present invention.

A VoIP service provider, such as cable VoIP service provider 103 or DSL VoIP service provider 113, receives (401) an emergency call request from a VoIP-capable CPE. The emergency call request is preferably originated by a CPE by dialing a predefined emergency sequence, such as 911.

The VoIP service provider identifies (403) the location of the VoIP-capable phone. As discussed above with regard to FIGs. 2 and 3, this is preferably done by accessing a table or database that includes records for each of the subscribers to the broadband VoIP service provider. The service provider searches the table, such as by using the customer modem MAC address in cable modem VoIP systems or the DSL line number in DSL systems, to find the record associated with the VoIP phone placing the emergency call.

The VoIP service provider determines (405) the PSAP associated with the location of the VoIP CPE. This is preferably accomplished by using the customer modem MAC address or DSL line number to find the associated PSAP routing number associated with the calling VoIP phone.

The VoIP service provider routes (407) the emergency call request to the PSAP associated with the VoIP CPE location. In the preferred embodiment of the present invention, no changes are required to the PSAP. The PSAP will perform similar processing and will respond to the emergency call in an expeditious manner.

The present invention thereby provides a method for routing an emergency call request from a VoIP phone to a PSAP. By determining the location of the VoIP phone and storing the preferred PSAP for the VoIP phone, when an emergency call request is received by the VoIP service provider, the request can be routed to the preferred PSAP. This routing is done without having to calculate in real-time the location of the closest PSAP. This also allows a PSAP to be identified for a VoIP phone.

While this invention has been described in terms of certain examples thereof, it is not intended that it be limited to the above description, but rather only to the extent set forth in the claims that follow.

## Claims

1. A method for routing an emergency call from a voice over internet protocol (VoIP) phone to a Public Safety Answering Point (PSAP), the method comprising:
receiving an emergency call request from a VoIP phone at a VoIP service provider;
determining a PSAP associated with the location of the VoIP phone; and
routing the emergency call request to the PSAP associated with the location of the VoIP phone.

2. A method for routing an emergency call from a VoIP phone to a PSAP in accordance with claim 1, the method further comprising the step of identifying the location of the VoIP phone.

3. A method for routing an emergency call from a VoIP phone to a PSAP in accordance with claim 2, wherein the step of identifying the location of the VoIP phone comprises associating the VoIP phone with a customer premises address.

4. A method for routing an emergency call from a VoIP phone to a PSAP in accordance with claim 3, wherein the step of associating the VoIP phone with an address comprises associating a customer modem MAC address with the customer premises address.

5. A method for routing an emergency call from a VoIP phone to a PSAP in accordance with claim 3, wherein the step of associating the VoIP phone with an address comprises associating a Digital Subscriber Line (DSL) line number with the customer premises address.

6. A method for routing an emergency call from a VoIP phone to a PSAP in accordance with claim 1, wherein the step of determining a PSAP associated with the location of the VoIP phone comprises retrieving a PSAP routing number from a table, and wherein the PSAP routing number is in the same record as the VoIP phone.

7. A method for routing an emergency call from a VoIP phone to a PSAP in accordance with claim 1, wherein the step of determining a PSAP associated with the location of the VoIP phone is done prior to the step of receiving an emergency call request from a VoIP phone.

8. A method for registering a VoIP phone for emergency service, the method comprising the steps of:
receiving a request for VoIP service from for a VoIP phone;
storing an identifier for the VoIP phone;
determining an address for the VoIP phone; and
determining a PSAP for the address utilizing the address for the VoIP phone.

9. A method for registering a VoIP phone for emergency service in accordance with claim 8, wherein the step of storing an identifier for the VoIP phone comprises storing a customer modem MAC address of the VoIP phone.

10. A method for registering a VoIP phone for emergency service in accordance with claim 8, wherein the step of storing an identifier for the VoIP phone comprises storing a DSL line number of the VoIP phone.
